# EUROPEAN PATENT APPLICATION

(11) **EP 4 155 701 A1**
(43) Date of publication of application: **29.03.2023**
(21) Application number: 21808345.9
(22) Date of filing: 14.05.2021
(51) Int. Cl.: G01L 1/00, G01L 5/00

(54) **SURFACE PRESSURE ANALYSIS DEVICE, METHOD, AND PROGRAM**

(30) Priority: 22.05.2020 JP 2020089730
(71) Applicant: FUJIFILM Corporation, Tokyo 106-8620 (JP)
(72) Inventor: SASAHARA, Kenji, Tokyo 106-8620 (JP); UEKI, Shota, Tokyo 106-8620 (JP); NIWA, Hiroyuki, Tokyo 106-8620 (JP); OMOTO, Makoto, Tokyo 106-8620 (JP)
(74) Representative: Parker, Andrew James
(86) International application number: PCT/JP2021/018481
(87) International publication number: WO 2021/235364

(57) **Abstract**

Provided are a surface pressure analysis device, a surface pressure analysis method, and a surface pressure analysis program capable of automatically evaluating the surface pressure applied to an inspection surface of a measurement object and supporting an inspector who performs a pass/fail determination of the measurement object. An image acquisition unit (210A) of a server that functions as the surface pressure analysis device acquires an inspection image (10) from a user terminal. The inspection image (10) is a capture image of a pressure measurement sheet that is disposed on the inspection surface of the measurement object and color-developed with a density distribution according to the intensity of the pressure applied to the inspection surface. A conversion unit (222) converts the density value of the inspection image (10) into a two-dimensionally distributed first pressure value. An evaluation information generation processing unit (224) compares the first pressure value with a limit sample read from a memory (240), and generates information (evaluation information) indicating the rate of match between the two as a primary determination result. The primary determination result is output (transmitted) from the output unit (210B) to the user terminal and displayed on a display of the user terminal.

## Description

### BACKGROUND OF THE INVENTION

### 1. Field of the Invention

The present invention relates to a surface pressure analysis device, a surface pressure analysis method, and a surface pressure analysis program, and particularly relates to a technique for analyzing and evaluating a two-dimensionally distributed surface pressure applied to an inspection surface of a measurement object.

### 2. Description of the Related Art

In the related art, methods of using a pressure measurement sheet having a microcapsule layer containing a color developer have been known in order to confirm a two-dimensionally distributed surface pressure applied to an inspection surface of a measurement object. As such a pressure measurement film, for example, there is "prescale" (trade name) provided by FUJIFII,M Corporation.

The pressure measurement sheet disposed on the inspection surface of the measurement object develops a color with a density distribution according to the surface pressure applied to the inspection surface. An inspector visually confirms the color-developed pressure measurement sheet to determine the pass/fail of the surface pressure applied to the inspection surface of the measurement object.

Additionally, JP2000-321152A proposes a pressure measurement method capable of measuring a maximum pressure larger than a pressure range that can be measured by a pressure measurement sheet in a case where the maximum pressure applied to a point-contact or line-contact portion of a measurement object is measured by the pressure measurement sheet.

In this pressure measurement method, an elastic sheet is sandwiched between the inspection surface of the measurement object and the pressure measurement sheet, and the pressure applied to the point-contact or line-contact portion of the measurement object is dispersed. After that, the color-developed pressure measurement sheet is read by a scanner, the read image (inspection image) is cut out on a line crossing the point-contact or line-contact portion, and the cut-out image is converted into a pressure value according to the shading. Then, using the pressure distribution of the converted pressure value, a maximum pressure originally applied to the point-contact or line-contact portion of the measurement object is estimated by calculation.

### SUMMARY OF THE INVENTION

Meanwhile, in a case where the inspector visually confirms the gradation of the developed color according to the intensity of the pressure applied to the pressure measurement sheet, and determines the pass/fail (that is, the pass/fail of the measurement object) of the surface pressure applied to the inspection surface of the measurement object, there is a problem that the determination result varies depending on the inspector because of the visual evaluation of the inspector, and it is desired to level the determination result that does not depend on the inspector.

Additionally, JP2000-321152A describes that the color-developed pressure measurement sheet is read by the scanner and the read image is analyzed. However, the pressure measurement method described in JP2000-321152A is a method of measuring the maximum pressure larger than a measurable pressure range of the pressure measurement sheet, and does not automatically evaluate the surface pressure applied to the inspection surface of the measurement object.

The present invention has been made in view of such circumstances, and an object thereof is to provide a surface pressure analysis device, a surface pressure analysis method, and a surface pressure analysis program capable of automatically evaluating the surface pressure applied to an inspection surface of a measurement object and supporting an inspector who performs a pass/fail determination of the measurement object.

The invention according to a first aspect in order to achieve the above object is a surface pressure analysis device comprising a processor; and a memory that stores reference information corresponding to a measurement object. The processor includes processing of acquiring a two-dimensionally distributed first pressure value applied to an inspection surface of the measurement object, processing of generating evaluation information for a surface pressure applied to the inspection surface of the measurement object on the basis of the acquired first pressure value and the reference information stored in the memory, and processing of outputting the generated evaluation information to a display.

According to the first aspect of the present invention, since the two-dimensionally distributed first pressure value applied to the inspection surface of the measurement object is acquired, and the evaluation information generated on the basis of the first pressure value and the reference information output to the display, it is possible to support an inspector who performs a pass/fail determination of the measurement object. That is, the inspector can perform a highly accurate pass/fail determination of the measurement object by referring to the evaluation information output to the display. Additionally, in a case where the pass/fail determination of the measurement object is performed by a plurality of inspectors, leveling of the determination result can be achieved.

In the surface pressure analysis device according to a second aspect of the present invention, it is preferable that the processing of acquiring the first pressure value includes processing of acquiring an inspection image from a camera that images a pressure measurement sheet disposed on the inspection surface of the measurement object and color-developed with a density distribution according to the surface pressure applied to the inspection surface, or from a scanner that scans the pressure measurement sheet, and processing of converting the acquired inspection image into the two-dimensionally distributed first pressure value, and the processor acquires the converted first pressure value.

In the surface pressure analysis device according to a third aspect of the present invention, it is preferable that the processing of acquiring the first pressure value includes acquiring the first pressure value from a surface pressure distribution measuring instrument that includes a pressure sensor sheet disposed on the inspection surface of the measurement object and outputs the two-dimensionally distributed first pressure value on the basis of an electrical signal according to the surface pressure applied to the inspection surface output from the pressure sensor sheet.

In the surface pressure analysis device according to a fourth aspect of the present invention, it is preferable that the processor performs processing of generating an inspection image having a density distribution according to the electrical signal on the basis of the electrical signal according to the surface pressure applied to the inspection surface.

In the surface pressure analysis device according to a fifth aspect of the present invention, it is preferable that the processor causes the display to display the inspection image.

In the surface pressure analysis device according to a sixth aspect of the present invention, it is preferable that the reference information is a limit sample having a second pressure value to be two-dimensionally distributed on the inspection surface, and the processing of generating the evaluation information generates information indicating a rate of match between the acquired first pressure value and the limit sample as the evaluation information.

In the surface pressure analysis device according to a seventh aspect of the present invention, it is preferable that the reference information includes a preset allowable range value, and the rate of match is at least one of a rate of match of areas or a rate of match of shapes between a first region where the first pressure value is within the allowable range value and a second region where the second pressure value of the limit sample is within the allowable range value.

In the surface pressure analysis device according to an eighth aspect of the present invention, the rate of match of the areas is a ratio of the areas between the first region and the second region. The higher this ratio, the higher the rate of match of the areas.

In the surface pressure analysis device according to a ninth aspect of the present invention, the rate of match of the shapes is a ratio of an area where the first region and the second region overlap each other and the area of the second region. The higher this ratio, the higher the rate of match of the shapes

In the surface pressure analysis device according to a tenth aspect of the present invention, the rate of match is a rate of match between the first pressure value and the second pressure value at one or a plurality of determination points of the inspection surface.

In the surface pressure analysis device according to an eleventh aspect of the present invention, it is preferable that the rate of match is a rate of match between the first pressure value and the second pressure value at a plurality of determination points of the inspection surface for every plurality of determination points of the inspection surface, and the processing of generating the evaluation information generates information indicating at least one rate of match of the rates of match for every plurality of determination points as the evaluation information. For example, in a case where at least one rate of match of the rates of match for every plurality of determination points is low, the evaluation information with a low rate of match can be used.

In the surface pressure analysis device according to a twelfth aspect of the present invention, the rate of match is a sum-of-products calculation value between an absolute difference between the first pressure value and the second pressure value at a plurality of determination points of the inspection surface and a weighting coefficient for every plurality of determination points. Accordingly, the rate of match can be obtained in consideration of the information as to whether or not the determination point is to be emphasized.

In the surface pressure analysis device according to the thirteenth aspect of the present invention, it is preferable that the reference information is a preset allowable range value, and the processing of generating the evaluation information generates at least one of an area of a first region where the first pressure value is within the allowable range value or a ratio of the area of the first region and an area of the inspection surface as the evaluation information. In addition, the allowable range value can be appropriately set by the user operation, for example, in a case where the user (inspector) inspects the inspection object. In this case, the limit sample is unnecessary.

In the surface pressure analysis device according to a fourteenth aspect of the present invention, it is preferable that the reference information is determination point information indicating regions or positions indicating a plurality of determination points of the measurement object, and the processing of generating the evaluation information specifies the first pressure values at the plurality of determination points on the basis of the determination point information, and generates information indicating a rate of match between the specified first pressure values as the evaluation information. By setting the plurality of determination points to be paid attention to on the inspection surface of the measurement object, the rate of match between the first pressure values at the plurality of determination points can be used as the evaluation information.

In the surface pressure analysis device according to the fifteenth aspect of the present invention, it is preferable that the reference information includes a threshold value set for an absolute difference in pressure applied to the plurality of determination points of the measurement object, and the processing of generating the evaluation information calculates an absolute difference between the specified first pressure values, and generates information indicating whether or not the calculated absolute difference is within the threshold value as the evaluation information. In a case where the absolute difference of the pressures applied to the plurality of determination points is within the threshold value, the pressure difference applied to the plurality of determination points can be determined to be relatively low, and this can be used as the evaluation information of the pressures applied to the plurality of determination points.

In the surface pressure analysis device according to a sixteenth aspect of the present invention, it is preferable that the reference information is determination point information indicating a region or position indicating one or a plurality of determination points of the measurement object, and an allowable range value preset corresponding to the determination point information, and the processing of generating the evaluation information specifies the first pressure value at the determination point on the basis of the determination point information, and generates the evaluation information on the basis of the specified first pressure value and the allowable range value.

In the surface pressure analysis device according to a seventeenth aspect of the present invention, it is preferable that the processor performs processing of receiving determination point information indicating a region or position indicating a determination point of the measurement object by a user specification, and processing of registering the received determination point information in the memory.

In the surface pressure analysis device according to an eighteenth aspect of the present invention, it is preferable that the processor generates the inspection image in which an image of the inspection image corresponding to within a first pressure range value and an image of the inspection image exceeding the first pressure range value are made identifiable. For example, the inspection image is color-separated into the image corresponding to within the first pressure range value and the image exceeding the first pressure range value, which are made identifiable. Additionally, the image exceeding the first pressure range value may be further color-separated into an image exceeding a low pressure side and an image exceeding a high pressure side.

In the surface pressure analysis device according to a nineteenth aspect of the present invention, it is preferable that the processor performs processing of receiving a second pressure range value by a user specification, and generates the inspection image in which a gradation width representing shading is enlarged with respect to an image of the inspection image corresponding to within the second pressure range value, in a case where the inspection image is generated. For example, in a case where the pressure range (second pressure range) to be confirmed in detail is received by the user specification, the gradation width representing the shading is enlarged with respect to the image corresponding to within the second pressure range value. Accordingly, it is possible to enhance the shading (rich in gradation) for the image within the second pressure range value.

In the surface pressure analysis device according to the twentieth aspect of the present invention, it is preferable that the processor performs processing of generating a three-dimensional image having an uneven shape according to a magnitude of the first pressure value on the basis of the inspection image, and processing of receiving a rotation instruction for the three-dimensional image by a user operation, and the processor rotates and moves the three-dimensional image is rotated and moved on the display on the basis of the received rotation instruction. Accordingly, the intensity distribution of the first pressure value, and the height difference of the intensity, inclination, and the like of a proximity region can be easily determined from the three-dimensional image.

In the surface pressure analysis device according to the twenty first aspect of the present invention, it is preferable that the reference information is a limit sample having a second pressure value to be two-dimensionally distributed on the inspection surface, and the processing of generating the evaluation information generates a superimposed image in which the inspection image having shading according to the first pressure value is superimposed on an image of the limit sample having shading according to the second pressure value, and uses the superimposed image as the evaluation information. Accordingly, it is possible to easily determine an overlap region and a non-overlap region in both images.

In the surface pressure analysis device according to a twenty second aspect of the present invention, it is preferable that the inspection image superimposed on the image of the limit sample is a transmission image having a display color different from a display color of the image of the limit sample and having transmittance according to the first pressure value.

In the surface pressure analysis device according to a twenty third aspect of the present invention, it is preferable that the processor performs processing of receiving a pass/fail determination result for inspection according to a user instruction for each measurement object, and storing the inspection image for each measurement object and accessory information for inspection including the pass/fail determination result in a database. Accordingly, the inspection image for each measurement object and the accessory information for inspection including the pass/fail determination result can be browsed or printed out as necessary.

In the surface pressure analysis device according to a twenty fourth aspect of the present invention, it is preferable that the accessory information includes one or more of identification information of the measurement object, a type of the pressure measurement sheet, an inspection condition, a pressure type, and information on an inspector who has instructed the pass/fail determination result, in addition to the pass/fail determination result.

In the surface pressure analysis device according to the 25th aspect of the present invention, it is preferable that the processor has a trained model in which a set of the inspection image and the pass/fail determination result stored in the database is machine-trained as training data, and the trained model outputs a pass/fail determination result in a case where an optional inspection image is input. In addition, the output of the pass/fail determination result includes the output of the certainty (certainty factor) of the pass/fail.

Preferably, the surface pressure analysis device according to a twenty sixth aspect of the present invention further comprises a user terminal and a server that mutually communicates between the user terminal and the user terminal, the user terminal transmits the inspection image to the server, the server generates the evaluation information for the inspection image and transmits the generated evaluation information to the user terminal, in a case where the server receives the inspection image from the user terminal, and the user terminal causes the display of the user terminal to display the evaluation information in a case where the user terminal receives the evaluation information from the server. Accordingly, the surface pressure analysis device can be configured by a system consisting of user terminals of a plurality of users and a server, and the server can generate an inspection image uploaded from each user terminal or evaluation information on the inspection image collected from each user terminal, and this evaluation information can be generated and provided to the user.

An invention according to a twenty seventh aspect is a surface pressure analysis method of analyzing a two-dimensionally distributed surface pressure applied to an inspection surface of a measurement object via a processor. Each processing of the processor includes a step of acquiring a two-dimensionally distributed first pressure value applied to the inspection surface of the measurement object, a step of generating evaluation information for the surface pressure applied to the inspection surface of the measurement object on the basis of the acquired first pressure value and reference information stored in a memory, and a step of outputting the generated evaluation information to a display.

An invention according to a twenty eighth aspect is a surface pressure analysis program that causes a computer to realize a surface pressure analysis method of analyzing a two-dimensionally distributed e surface pressure applied to an inspection surface of a measurement object. The surface pressure analysis method includes a step of acquiring a two-dimensionally distributed first pressure value applied to the inspection surface of the measurement object, a step of generating evaluation information for the surface pressure applied to the inspection surface of the measurement object on the basis of the acquired first pressure value and reference information stored in a memory, and a step of outputting the generated evaluation information to a display.

According to the present invention, the surface pressure applied to the inspection surface of the measurement object can be automatically evaluated, and the automatically evaluated evaluation information can be output to the display to support the inspector that determines the pass/fail of the measurement object.

### BRIEF DESCRIPTION OF THE DRAWINGS

Fig. 1 is a schematic configuration diagram showing an embodiment of a surface pressure analysis device according to the present invention.
Fig. 2 is a conceptual diagram showing an aspect of previous preparation in a case where the present system is used.
Fig. 3 is a plan view showing a first embodiment of a calibration sheet.
Fig. 4 is a plan view showing a second embodiment of the calibration sheet.
Fig. 5 is a plan view showing a third embodiment of the calibration sheet.
Figs. 6A and 6B are views showing an example of an image of a limit sample.
Fig. 7 is a view showing a screen transition of a smartphone in a case where a pressure measurement sheet is imaged.
Fig. 8 is a view showing the screen transition of the smartphone from an inspection image display to an inspection result display.
Fig. 9 is a view showing the screen transition of the smartphone in a case where inspection images, inspection results, and the like are browsed.
Fig. 10 is a block diagram of major parts showing an electrical configuration of the surface pressure analysis device shown in Fig. 1.
Fig. 11 is a block diagram showing a first embodiment of the surface pressure analysis device according to the present invention.
Fig. 12 is a block diagram showing a second embodiment of the surface pressure analysis device according to the present invention.
Fig. 13 is a view showing the screen transition of the smartphone in a case where the shading of a captured inspection image is enhanced.
Fig. 14 is an image view of internal processing in a case where the shading of the inspection image is enhanced.
Fig. 15 is a view showing the screen transition of the smartphone in a case where a captured inspection image is displayed in 3D.
Fig. 16 is a view showing the screen transition of the smartphone in a case where the captured inspection image and the limit sample are superimposed on each other and displayed.
Fig. 17 is a block diagram showing a third embodiment of the surface pressure analysis device according to the present invention.
Fig. 18 is a view showing another screen transition of the smartphone from the inspection image display to the inspection result display.
Fig. 19 is a view showing an example of an inspection result aggregation report.
Fig. 20 is a flowchart showing an embodiment of the surface pressure analysis method according to the present invention.

### DESCRIPTION OF THE PREFERRED EMBODIMENTS

Hereinafter, preferred embodiments of a surface pressure analysis device, a surface pressure analysis method, and a surface pressure analysis program according to the present invention will be described with reference to the accompanying drawings.

### [Overview of present invention]

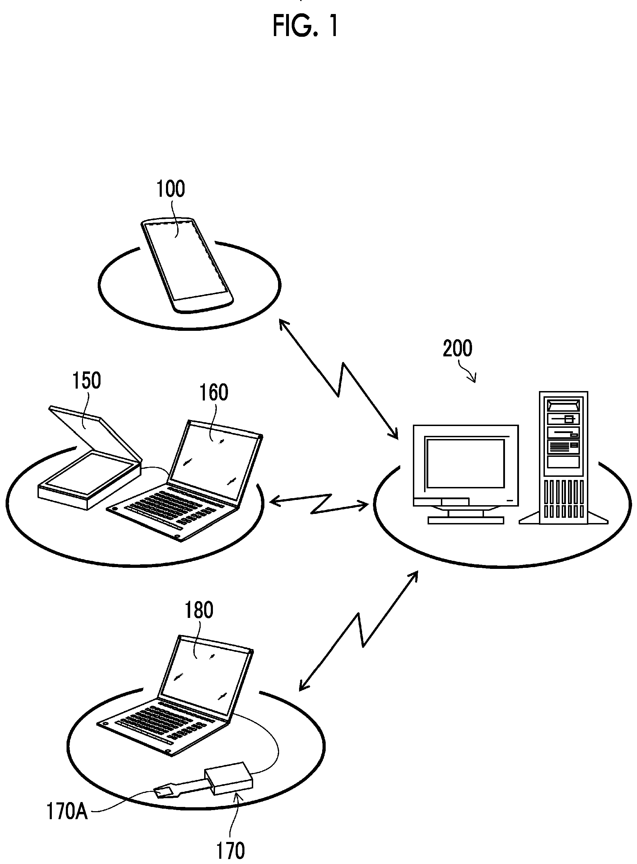

Fig. 1 is a schematic configuration diagram showing an embodiment of the surface pressure analysis device according to the present invention.

The surface pressure analysis device shown in Fig. 1 analyzes a two-dimensionally distributed surface pressure applied to an inspection surface of a measurement object and provides an evaluation result to a user, and is configured as a surface pressure analysis system consisting of a user terminal and a server.

As the user terminal, for example, a smartphone 100, a personal computer (PC) 160 to which a scanner 150 is connected, a PC 180 to which a surface pressure distribution measuring instrument 170 including a pressure sensor sheet 170A is connected, and the like are conceivable. In addition, application software for using the present system is installed in the smartphone 100, the PC 160, and the PC 180. Additionally, the scanner 150 of the present example is connected to the PC 160 by wire (universal serial bus (USB) cable), but may be connected wirelessly. Similarly, the surface pressure distribution measuring instrument 170 may also be wirelessly connected to the PC 180.

The server 200 shown in Fig. 1 includes one or a plurality of servers including an authentication server, a Web server, a measurement processing engine, and an image database server.

### <Overview of system functions>

The authentication server in the server 200 authenticates the function license of the user terminal. The function license includes reading the pressure measurement sheet (prescale) with a camera, measuring, browsing inspection history, and managing the system. The user terminal is authenticated by the authentication server for the functions to be used at startup.

The Web server receives a hyper text transfer protocol (HTTP) request from the user terminal and cooperates with the measurement processing engine and the image database server. In addition, the communication protocol is not limited to HTTP, and other communication protocols can also be used.

The measurement processing engine and the image database server perform image processing on an input prescale image (inspection image), convert the image processed prescale image into a pressure value, and convert the pressure value into a pressure value distribution. In addition, the inspection image may be input from the surface pressure distribution measuring instrument 170 having the pressure sensor sheet 170A.

A first pressure value indicating the pressure value distribution is compared with the limit sample, and the comparison result (evaluation information) is returned to the user terminal. A final determination (pass/fail determination result) of the user (inspector) is received from the user terminal, and an inspection image and the pass/fail determination result in that case are registered in the image database. In addition, the inspection history is registered in a history database.

The smartphone 100, which functions as the user terminal, images the pressure measurement sheet with a camera built in the smartphone 100. Here, the pressure measurement sheet is a film having a microcapsule layer containing a color developer, is disposed on the inspection surface of the measurement object in use, and develops a color with a density distribution according to the intensity of the pressure applied to the inspection surface. That is, the pressure measurement sheet is a sensor that detects the pressure of the entire sheet, and the color optical density distribution of the developed color of the pressure measurement sheet indicates the pressure value distribution.

The smartphone 100 transmits the image (inspection image) of the pressure measurement sheet captured by the camera to the server 200, receives the evaluation information on the inspection image (pressure applied to the inspection surface), which has been processed by the measurement processing engine of the server 200, from the server 200, and displays the evaluation information on the display of the smartphone 100. Additionally, the smartphone 100 transmits the pass/fail determination result finally determined by the inspector to the server 200.

In the PC 160 to which the scanner 150 functioning as another user terminal is wirelessly connected, the scanner 150 acts as the camera of the smartphone 100. That is, the scanner 150 scans a color-developed surface of the pressure measurement sheet, acquires the image (inspection image) of the pressure measurement sheet, and transmits the acquired inspection image to the PC 160. Since the other functions of the PC 160 are the same as those of the smartphone 100, the description thereof will be omitted.

Moreover, the PC 180 to which the surface pressure distribution measuring instrument 170 functioning as another user terminal is connected inputs the two-dimensionally distributed pressure value (first pressure value) from the surface pressure distribution measuring instrument 170.

The surface pressure distribution measuring instrument 170 includes a pressure sensor sheet 170A disposed on the inspection surface of the measurement object, and outputs the two-dimensionally distributed first pressure value to the PC 180 on the basis of an electrical signal according to the surface pressure applied to the inspection surface output from the pressure sensor sheet 170A. A large number of pressure-sensitive elements are arranged in a matrix on the pressure sensor sheet 170A, and the surface pressure distribution measuring instrument 170 outputs the first pressure value to the PC 180 according to the pressure applied to each pressure-sensitive element by performing scanning with each pressure-sensitive element.

The PC 180 transmits the first pressure value acquired from the surface pressure distribution measuring instrument 170 to the server 200. In addition, since the two-dimensionally distributed first pressure value can be used as the inspection image by assigning the first pressure value to, for example, a gradation value of 0 to 255, the PC 180 can be converted into the inspection image and can also be transmitted to the PC 160.

### <Previous preparation>

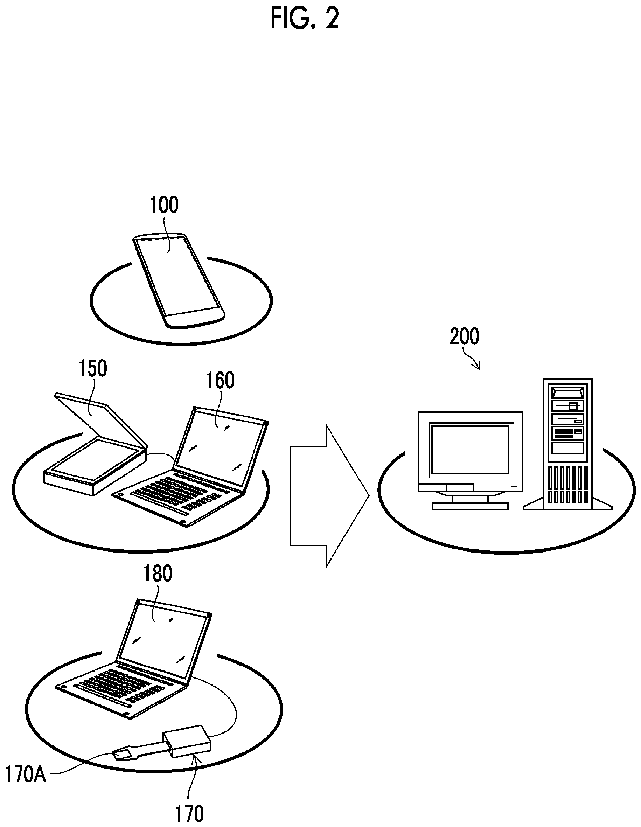

Fig. 2 is a conceptual diagram showing an aspect of previous preparation in a case where the present system is used.

As shown in Fig. 2, the user of each user terminal performs the previous preparations corresponding to each user terminal. In addition, the previous preparation includes a preparation to be performed only for the first time and a preparation to be performed every time the inspection object is changed.

Hereinafter, the previous preparations in a case where the user terminal is the smartphone 100 will be described.
(1) Download the application software corresponding to the present system from the server 200 or the like.

### (2) Setting of calibration method

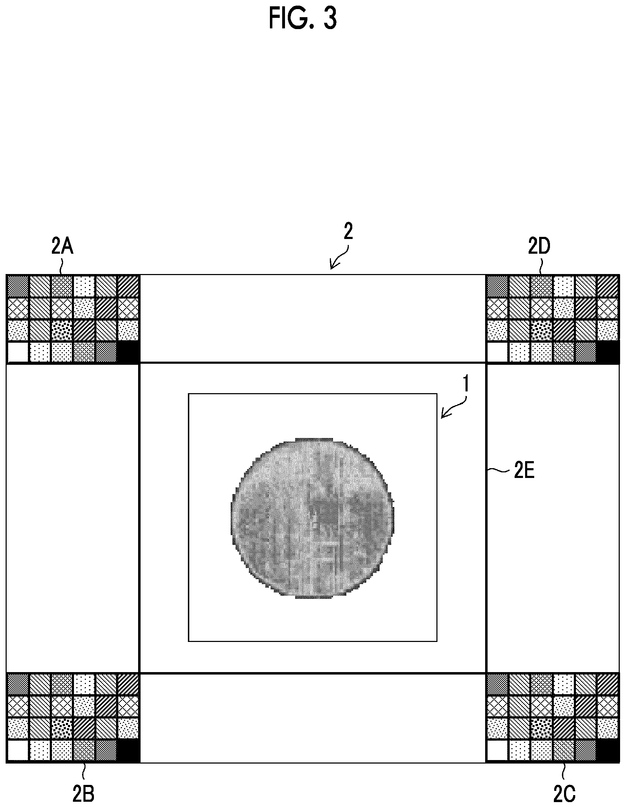

Fig. 3 is a plan view showing a first embodiment of the calibration sheet.
a) Start the camera on the application software and image the calibration sheet 2 shown in Fig. 3.
   The calibration sheet 2 is provided with density charts 2A to 2D at four corners and a rectangular frame 2E at the central part. In addition, a pressure measurement sheet 1 corresponding to the limit sample or the like is appropriately disposed in a frame 2E of the calibration sheet 2 and imaged simultaneously. However, the present invention is not limited to this, and the calibration sheet 2 and the pressure measurement sheet 1 corresponding to the limit sample or the like may be separately and continuously imaged.
b) The application software automatically analyzes the images of the density charts 2A to 2D in the image obtained by imaging the calibration sheet 2.
c) The present system sets an optimal calibration method (correction method of the captured image) for the camera (imaging environment) of the smartphone 100 depending on the analysis results of the images of the density charts 2A to 2D.

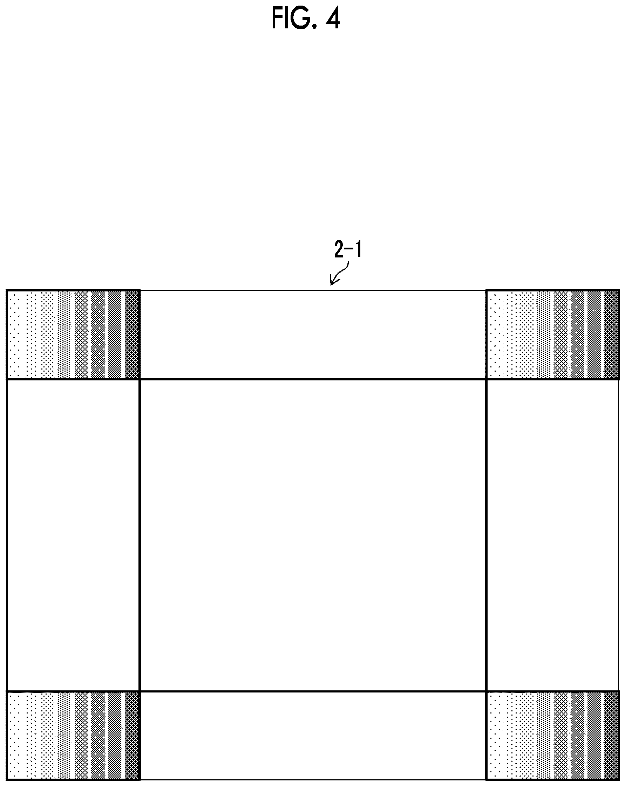

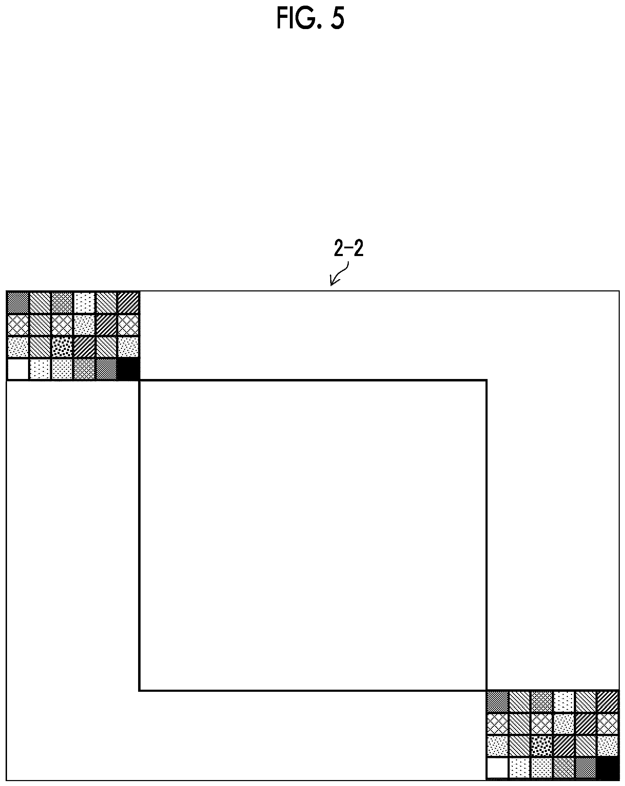

In addition, the calibration sheet 2 is not limited to the first embodiment shown in Fig. 3 and may be, for example, a calibration sheet of a second embodiment and a calibration sheet of the third embodiment, which are shown in Figs. 4 and 5, respectively.

The calibration sheet 2-1 shown in Fig. 4 has a density chart with one color gradation at four corners. Additionally, a calibration sheet 2-2 shown in Fig. 5 is different from the calibration sheet 2 having the density charts at the four corners shown in Fig. 3 in that the density charts are provided at two diagonal points.

### (3) Registration of reference information

The reference information corresponding to the measurement object is information used in a case where the surface pressure applied to the inspection surface of the measurement object is evaluated, and is, for example, the limit sample, determination point information indicating a region or position indicating one or a plurality of determination points of the inspection surface of the measurement object, a threshold value for evaluating an absolute difference (absolute value of difference) in pressure applied to the plurality of determination points, and the like.
a) The pressure measurement sheet 1 corresponding to the limit sample (for example, a second pressure value to be two-dimensionally distributed on the inspection surface of the measurement object) is disposed in the frame 2E of the calibration sheet 2 (see Fig. 2), and the pressure measurement sheet 1 is imaged together with the calibration sheet 2. Alternatively, the calibration sheet 2 and the pressure measurement sheet 1 corresponding to the limit sample or the like may be separately and continuously imaged.
   The captured image is corrected using the information on the calibration sheet 2, and this is registered as the limit sample. In addition, the information in the frame 2E of the calibration sheet 2 can be used for the image size of the limit sample, distortion correction, and the like.
b) Select and register a part (position, region) to be inspected according to the user instruction.

The part to be measured can be selected by marking on the pressure measurement sheet 1 corresponding to the limit sample.

Additionally, in addition to the marking, an inspection range can be specified by image coordinate information, or a measurement object part can be registered by the coordinates on the inspection image of the pressure measurement sheet 1 corresponding to the limit sample. Moreover, positional information may be specified from a computer-aided design (CAD) drawing or the like of the part to be inspected.

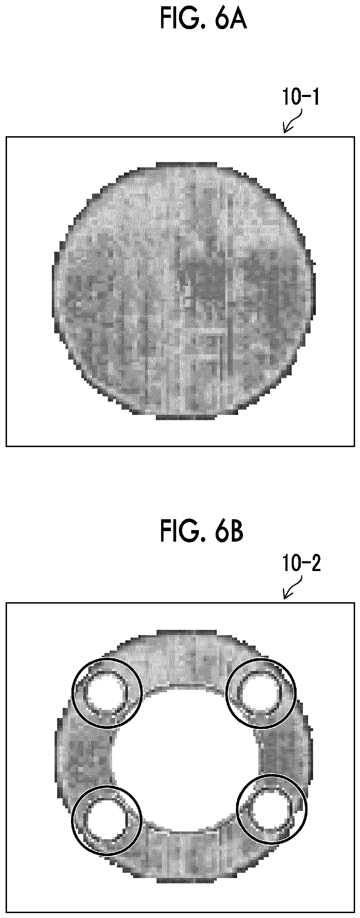

Figs. 6A and 6B are views showing an example of the image of the limit sample.

Fig. 6Ais an image 10-1 of a limit sample corresponding to an inspection object having a flat circular inspection surface. In this case, using a user interface such as the display of the smartphone 100 on which the image 10-1 of the limit sample is displayed is used, a region (for example, an outer edge of the circular inspection surface) indicating the determination point of the measurement object can be specified by the user.

Fig. 6B is an image 10-2 of a limit sample corresponding to an inspection object of a gasket.

The gasket shown in Fig. 6(B) has a ring-shaped inspection surface, and the ring-shaped inspection surface has four holes. In this case, using the display or the like of the smartphone 100 on which the image 10-2 of the limit sample of the gasket is displayed, the user can specify the ring-shaped region of the gasket as a region indicating the determination point.

Additionally, as shown in Fig. 6B, the regions around the four holes of the gasket can be marked on the image 10-2 of the limit sample and specified as the parts to be inspected. In addition, in Fig. 6B, the part to be inspected is specified by a circular marker, but the present invention is not limited to this, and the part to be inspected can be specified by a rectangular marker or an optional closed curve.

Moreover, a position (coordinates in the image) indicating one or a plurality of determination points may be specified in addition to the region indicating the determination point of the measurement object. Additionally, the registration of the reference information such as the limit sample may be performed on the server 200 side.

On the other hand, in a case where the PC 160 to which the scanner 150 is connected is the user terminal, a calibration method corresponding to the scanner 150 is selected by incorporating the image of the calibration sheet 2 with the scanner 150. Additionally, in the case of the PC 180 to which the surface pressure distribution measuring instrument 170 is connected, the setting of the calibration method can be omitted.

All related to inspection work, such as the above imaging conditions, the correction method of the captured image, the reference information, the storage condition of the pass/fail determination result, and the browsing conditions, are defined as the "inspection work".

### <Imaging>

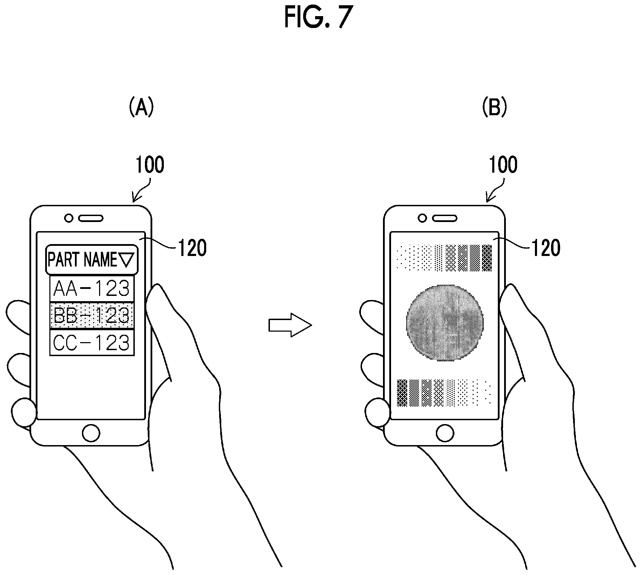

Fig. 7 is a view showing a screen transition of the smartphone in a case where the pressure measurement sheet is imaged.

The "inspection work" defined in the previous preparation is selected, necessary items (component name, component number, inspection date, inspection method, and the like of the inspection object) are selected or input, and the inspection object is imaged.

For example, as shown in (A) of Fig. 7, the component name and component number of the inspection object to be inspected are set by using a display 120 of the smartphone 100.

Subsequently, the pressure measurement sheet pressurized on the inspection surface of the inspection object is imaged by the camera of the smartphone 100. The image captured by the camera of the smartphone 100 is corrected by an imaging condition or the like defined in advance, and is displayed as the inspection image on the display 120 of the smartphone 100 as shown in (B) of Fig. 7.

In a case where the smartphone 100 receives a transmission instruction for the inspection image, the smartphone 100 transmits the captured inspection image to the server 200.

### <Measurement and determination support>

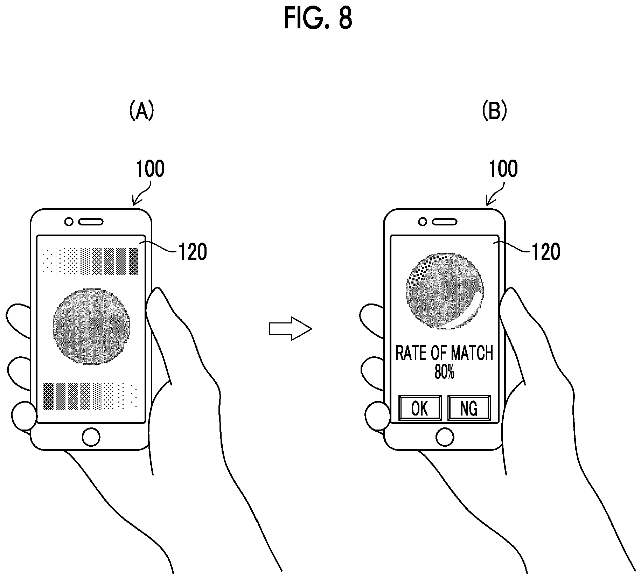

Fig. 8 is a view showing the screen transition of the smartphone from an inspection image display to an inspection result display.

The inspection image is displayed on the display 120 of the smartphone 100 shown in (A) of Fig. 8 similar to (B) of Fig. 7.

The server 200 measures and compares the inspection image transmitted from the smartphone 100 under conditions such as the reference information defined in advance, and returns the measurement result (including the evaluation information) to the smartphone 100 as the primary determination result.

The primary determination result measured and determined by the server 200 with respect to the inspection image is displayed on the display 120 of the smartphone 100 shown in (B) of Fig. 8.

In an example shown in (B) of Fig. 8, a comparison result with the limit sample is displayed as the primary determination result. For example, a rate of match with the pressure value (first pressure value) two-dimensionally distributed on the inspection surface identified from the inspection image and an image showing the rate of match are displayed.

Here, the rate of match can be, for example, at least one of the rate of match of areas or the rates of match of shape between a region (first region) in which the first pressure value on the inspection surface identified from the inspection image is within an allowable range value, and a region (second region) in which the pressure value (second pressure value) distributed on the limit sample is within the allowable range value.

In addition, the allowable range value can be set in advance as the reference information. For example, 5 to 6 MPa is set as the allowable range value in a case where a user uses LW (a prescale type capable of measuring a pressure of 2.5 to 10 MPa) as the pressure measurement sheet (prescale), and the user wants to inspect the rate of match, especially, at 5 to 6 MPa (= allowable range value on the user side) (in a case where the user wants to determine the match only by this pressure range value).

Additionally, the rate of match of the areas can be, for example, the ratio of the area of the first region obtained from the inspection image and the area of the second region obtained from the limit sample, and the rate of match of the shapes can be the ratio of the area where the first region and the second region overlap each other and the area of the second region. Moreover, it is also conceivable to determine the rate of match by the multiplication of the ratio of the area and the allowable range value.

In the example shown in (B) of Fig. 8, a "rate of match of 80%" is shown. Additionally, among images exceeding the allowable range value, an image exceeding an upper limit value of the allowable range value and an image exceeding the lower limit value are separated in colors and displayed. In addition, the color-separated image of each region is displayed as an image having the same shading as the inspection image.

According to this, it is possible to confirm a region satisfying the allowable range value on the inspection surface (inspection image) of the measurement object, and the confirmed region can be used as a reference for pass/fail determination.

### [Other rate of match and evaluation methods]

The determination point information indicating a region or position (coordinates on the inspection image) indicating one or a plurality of determination points of the inspection surface of the measurement object is set as the reference information, and the rate of match can be the rate of match between the first pressure value at one or a plurality of the determination points of the inspection surface and the second pressure value at the same determination point of the limit sample.

Additionally, in a case where the rates of match by the plurality of determination points are obtained, information indicating at least one rate of match among the rates of match for every plurality of determination points may be generated as the primary determination result (evaluation information). For example, in a case where at least one rate of match of the rates of match for every plurality of determination points is low, the evaluation information with a low rate of match can be used.

Additionally, the rate of match is a sum-of-products calculation value between the absolute difference (absolute value of the difference) between the first pressure value and the second pressure value at the plurality of determination points on the inspection surface and the weighting coefficient for every plurality of determination points. Accordingly, the rate of match can be obtained in consideration of the information as to whether or not the determination point is to be emphasized.

Moreover, the allowable range value may be set as the reference information without setting the limit sample. In this case, at least one of the area of the first region where the first pressure value on the inspection surface identified from the inspection image is within the allowable range value or the ratio of the area of the first region and the area of the inspection surface may be generated as evaluation information. In addition, the allowable range value can be appropriately set by the user operation, for example, in a case where the user (inspector) inspects the inspection object.

Moreover, as the reference information, it is possible to set the determination point information indicating the regions or positions indicating the plurality of determination points of the measurement object. In this case, the first pressure values at the plurality of determination points can be specified on the basis of the determination point information, respectively, and the information indicating the rates of match of the specified first pressure values can be generated as the evaluation information. For example, in a case where the user sets two determination points to be paid attention to on the inspection surface of the measurement object and the first pressure values at the two determination points match or almost match, the rate of match can be evaluated to be high.

Additionally, the determination point information indicating the regions or positions indicating the plurality of determination points of the measurement object, and the threshold value set for the absolute difference in pressure applied to the plurality of determination points of the measurement object can be set as the reference information. In this case, the first pressure values at the plurality of determination points can be respectively specified on the basis of the determination point information, the absolute difference between the specified first pressure values can be calculated, and the information indicating whether or not the calculated absolute difference is within the threshold value can be used as the evaluation information. In a case where the absolute difference of the pressures applied to the plurality of determination points is within the threshold value, the pressure difference applied to the plurality of determination points can be determined to be relatively low, and this can be used as the evaluation information of the pressures applied to the plurality of determination points.

Moreover, the determination point information indicating the region or position indicating one or the plurality of determination points of the measurement object, and the allowable range value preset corresponding to the determination point information can be set as the reference information. In this case, the first pressure value at the determination point is specified on the basis of the determination point information, and the evaluation information is generated on the basis of the specified first pressure value and the allowable range value. For example, it is possible to generate the evaluation information such as whether or not the first pressure value of one or the plurality of determination points that the user is paying attention to is within the preset allowable range value.

Returning to Fig. 8, an "OK" icon and an "NG" icon are displayed below the display 120 of the smartphone 100 shown in (B) of Fig. 8. The inspector determines pass/fail, which is the final determination for the measurement object, with reference to the primary determination result by the server 200 shown in (B) of Fig. 8 in addition to the inspection image shown in (A) Fig. 8, taps the "OK" icon in the case of a pass, and tap the "NG" icon in the case of failure.

Additionally, a "HOLD" icon may be prepared to hold the determination for cases where neither can be determined.

The pass/fail determination result of the inspection for each measurement object according to the user instruction (operation of the "OK" icon, "NG" icon, or the like) is transmitted to the server 200 and stored as accessory information of the inspection image in the image database of the server 200. Additionally, in the image database or the relevant database related to the image database, it is preferable to store the measurement result such as the primary determination result in association with the inspection image.

The accessory information of the inspection image includes at least one or more the identification information (component name, component number) of the measurement object, the type of the pressure measurement sheet, the inspection conditions, the pressure type, and the information on the inspector who has instructed the pass/fail determination result, in addition to the pass/fail determination result, and the accessory information can be input at the stage of the previous preparation and registered in the server 200.

In addition, the type of pressure measurement sheet is a type of pressure measurement sheet (prescale) having a different measurable pressure region, and includes a sheet for low pressure (LW), a sheet for medium pressure (MS), and a sheet for high pressure (HS). The inspection conditions include temperature and humidity in use. Since a relationship between the color optical density and the pressure of the pressure measurement sheet changes depending on the temperature and humidity, the temperature and humidity conditions are used as correction information for obtaining the correct pressure. The pressure type is a type of method of applying pressure to the pressure measurement sheet, and there are types such as instantaneous pressure and continuous pressure.

### <History browsing>

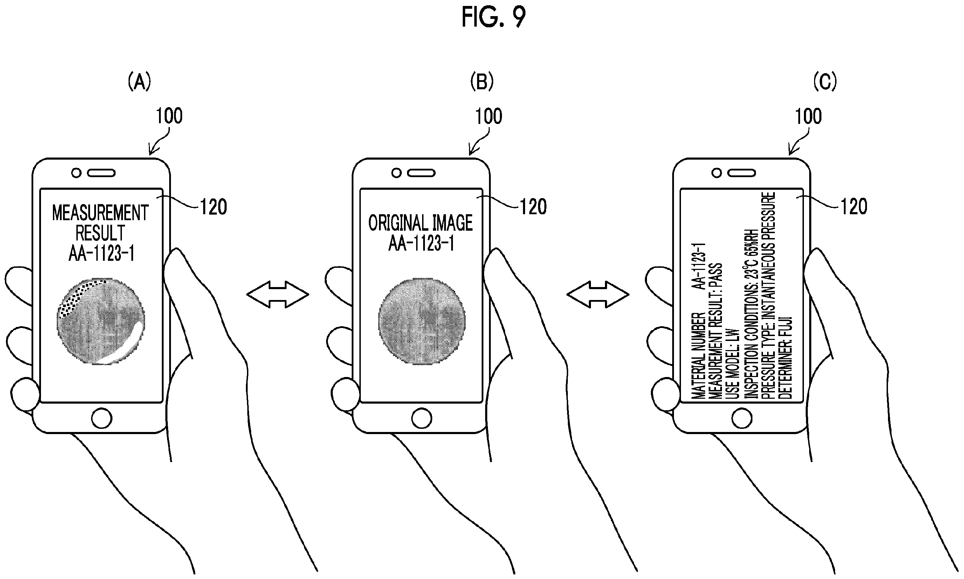

Fig. 9 is a view showing the screen transition of the smartphone in a case where inspection images, inspection results, and the like are browsed.

The display 120 of the smartphone 100 shown in (B) of Fig. 9 displays an inspection image (original image) of a desired measurement object stored in the image database of the server 200. The user can search the corresponding original image from the image database by using the identification information (component name, component number) of the desired measurement object from the smartphone 100 and display the original image on the display 120.

Additionally, the user can switch from the original image of the measurement object displayed on the display 120 of the smartphone 100 shown in (B) of Fig. 9 to the inspection result of the server 200 on the original image to cause the inspection result to be displayed ((A) of Fig. 9), or can switch to the accessory information (text information) for the original image to cause the accessory information to be displayed ((C) of Fig. 9C).

That is, the user can request browsing from the smartphone 100 to the server 200 and cause the display 120 of the smartphone 100 to display the original image indicating the pressure distribution on the inspection surface of the desired measurement object, and can display the original image and the inspection result through mutual switch or display the original image and the accessory information through mutual switch.

### [Electrical configuration of surface pressure analysis device]

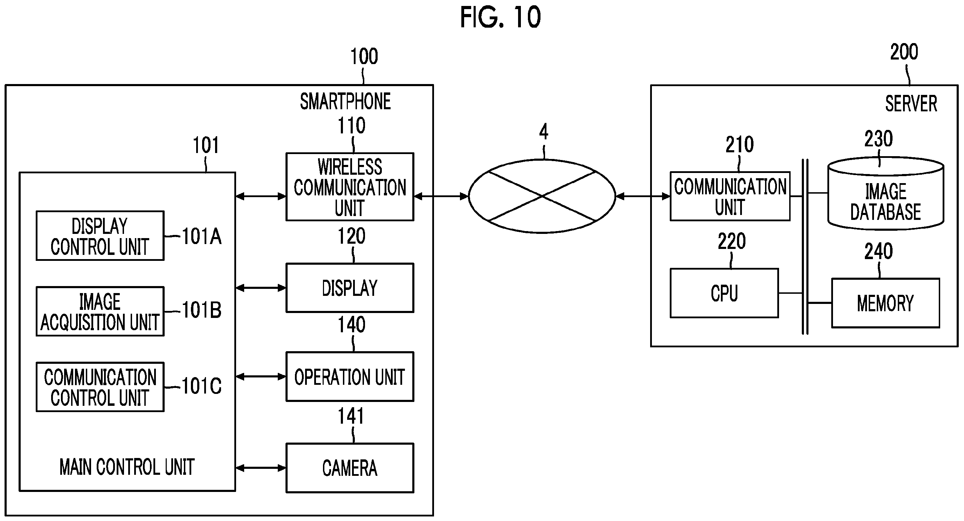

Fig. 10 is a block diagram of major parts showing an electrical configuration of the surface pressure analysis device shown in Fig. 1, and showing a case where the smartphone is used as the user terminal.

### <Smartphone>

The smartphone 100 includes a main control unit 101, a wireless communication unit 110, the display 120, an operation unit 140, and a camera 141 as main components. The smartphone 100 is also provided with memories such as a call unit, a random access memory (RAM), a read only memory (ROM), and a flash ROM, which are omitted in Fig. 10.

The main control unit 101 comprises a processor, operates according to a control program, application software, and control data stored in a memory, and controls respective parts of the smartphone 100 in an integrated manner.

The program (application software) according to the present invention is installed in the main control unit 101 of the smartphone 100, and functions as a display control unit 101A, an image acquisition unit 101B, and a communication control unit 101C by executing this application software.

The display control unit 101A performs the control of causing the display 120 to display an input screen for various information to be displayed on the display 120 according to a user instruction from the operation unit 140, an inspection image captured by the camera 141, an inspection result received from the server 200, and the like.

In a case where the camera 141 is activated on the present application software and the image of the pressure measurement sheet captured by the camera 141 is acquired from the camera 141, the image acquisition unit 101B corrects the image by the calibration method set in the previous preparation, and acquires an image (inspection image) that does not depend on the model of camera 141, the imaging conditions, and the like.

Additionally, in a case where the pressure measurement sheet is placed on the calibration sheet 2 shown in Fig. 3 and images are captured by the camera 141, the image acquisition unit 101B can use the images acquired from the camera 141 as information such as the density charts 2A to 2D of the calibration sheet 2 and the rectangular frame 2E, standardize the density, size, and shape of the image of the pressure measurement sheet, and cut out an image in the frame 2E and the cut-out image as an inspection image.

The communication control unit 101C transmits the inspection image acquired by the image acquisition unit 101B to the server 200 via the wireless communication unit 110 and the network 4, and acquires the primary determination result measured and determined by the server 200 on the basis of the inspection image via the network 4 and the wireless communication unit 110.

The display 120 is a display with a touch panel comprising the touch panel on the screen. Under the control of the main control unit 101, the display 120 displays images, text information, and the like to visually transmit the information to the user and detects user operations on the displayed information.

The operation unit 140 is a hardware key using a key switch or the like, and receives an instruction from the user. For example, the operation unit 140 includes a "keyboard" icon, a "numeric keypad" icon, an icon button, and the like displayed on the display 120, in addition to a mechanical switch provided in a housing of the smartphone 100.

The camera 141 can be used for various functions of the smartphone 100. In a case where the camera 141 is activated on the present application software, the camera 141 is used for imaging a pressure measurement sheet for evaluating the pressure applied to the inspection surface of the measurement object.

### <Server 200>

The server 200 shown in Fig. 10 functions as a major part of the surface pressure analysis device or the surface pressure analysis system, and mainly includes a communication unit 210, a central processing unit (CPU) 220, an image database 230, and a memory 240.

The CPU 220 functions as the measurement processing engine that controls the respective parts of the server 200 in an integrated manner and generates the primary determination result (evaluation information) on the basis of the inspection image according to a surface pressure analysis program stored in the memory 240. Additionally, the CPU 220 transmits (returns) the primary determination result acquired by the measurement processing engine to the smartphone 100 (smartphone 100 that has transmitted the inspection image) via the communication unit 210.

The image database 230 is a portion that registers and manages the inspection image of the measurement object received from the user terminal in association with the identification information such as the component name and the component number of the measurement object. Additionally, the final determination (pass/fail determination result) by the inspector received from the user terminal, the component name, the component number, and the inspection date of the measurement object, the type of pressure measurement sheet, the inspection conditions, the pressure type, the information on the inspector that has instructed the pass/fail determination result, and the like are registered as accessory information on the inspection image in the image database 230. Moreover, the image database 230 may store the primary determination result in association with the identification information of the measurement object.

In addition, a data set in which the inspection image stored and accumulated in the image database 230 and the pass/fail determination result are paired can be used as training data. By causing a training model to receive machine-training by using this training data, a trained model that performs a pass/fail determination (performs classification of the pass/fail determination) of the inspection image can be obtained.

The memory 240 includes a memory in which various programs including an operating system and the surface pressure analysis program are stored, a memory that stores the reference information corresponding to the measurement object, the reference information such as the limit sample, the allowable range value, the threshold value, and the determination point information indicating the region or position indicating one or the plurality of determination points of the measurement object, and a memory that serves as a work area of the CPU 220.

### [First embodiment]

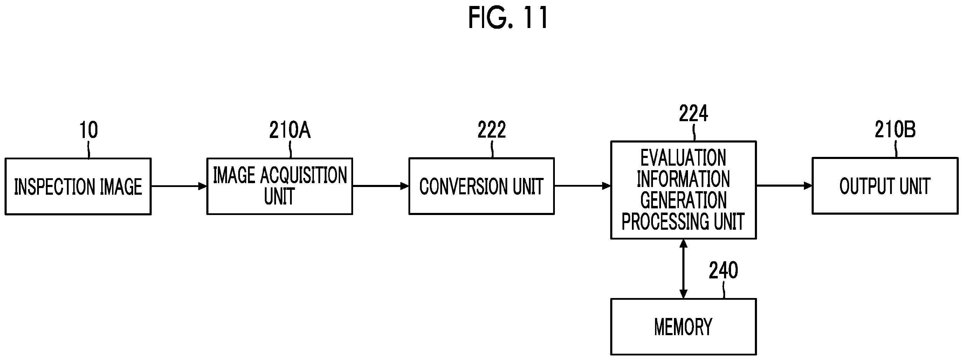

Fig. 11 is a block diagram showing a first embodiment of the surface pressure analysis device according to the present invention, and is a functional block diagram showing the functions of the server 200 shown in Fig. 10.

The surface pressure analysis device of the first embodiment shown in Fig. 1 mainly comprises an image acquisition unit 210A, an output unit 210B, a conversion unit 222, an evaluation information generation processing unit 224, and a memory 240.

The image acquisition unit 210A acquires the inspection image 10 captured by the user terminal ((A) of Fig. 8). The image acquisition unit 210A corresponds to the communication unit 210 of the server 200 that receives the inspection image 10 transmitted from the user terminal.

The conversion unit 222 has a conversion table or conversion formula showing a relationship between the pressure value and the density value, and converts the density value of the inspection image 10 acquired by the image acquisition unit 210A into the pressure value by using the conversion table or conversion formula. Accordingly, the two-dimensionally distributed first pressure value is acquired.

The evaluation information generation processing unit 224 is a processing unit by the measurement processing engine, compares the first pressure value output from the conversion unit 222 with the limit sample read from the memory 240, and generates the information (evaluation information) indicating the rate of match between the two as the primary determination result. Here, the limit sample is the reference information having the pressure value (second pressure value) to be two-dimensionally distributed on the inspection surface of the measurement object, and is set and registered in advance in the memory 240 by the user.

The primary determination result generated by the evaluation information generation processing unit 224 is output (transmitted) from the output unit 210B to the user terminal and displayed on the display of the user terminal ((B) of Fig. 8). The output unit 210B corresponds to the communication unit 210 of the server 200 that transmits the primary determination result to the user terminal.

After that, in a case where the inspector performs the pass/fail determination, which is the final determination for the measurement object, with reference to the primary determination result, and the like, and taps the "OK" icon or the "NG" icon of the user terminal (smartphone 100), the pass/fail determination result is transmitted to the server 200. The pass/fail determination result is registered in the image database 230 of the server 200 as the accessory information of the inspection image together with the inspection image.

### [Second Embodiment]

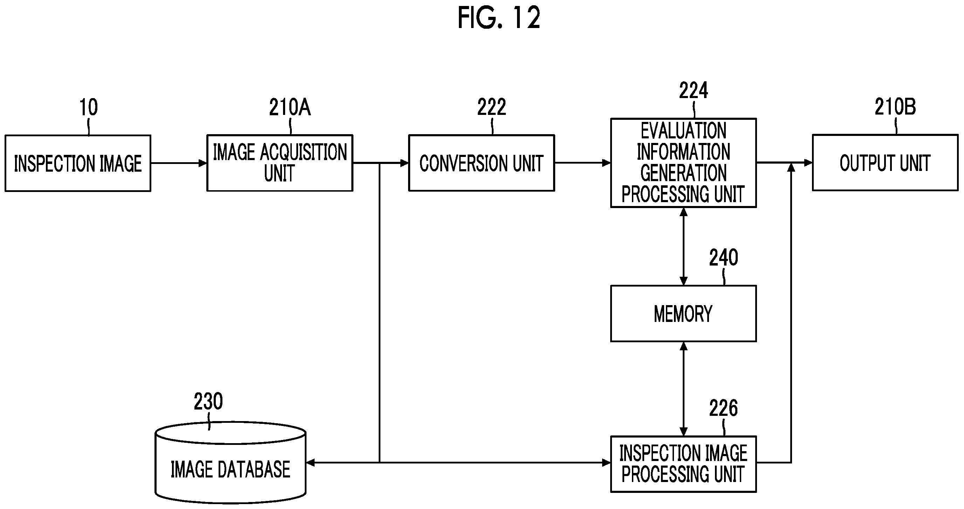

Fig. 12 is a block diagram showing a second embodiment of the surface pressure analysis device according to the present invention. In addition, in Fig. 12, the portions common to the surface pressure analysis device of the first embodiment shown in Fig. 11 will be designated by the same reference numerals, and the detailed description thereof will be omitted.

The surface pressure analysis device of the second embodiment shown in Fig. 12 is different from the surface pressure analysis device of the first embodiment in that an image database 230 and an inspection image processing unit 226 are mainly added.

The inspection image 10 acquired by the image acquisition unit 210A is registered in the image database 230 and added to the inspection image processing unit 226.

The inspection image processing unit 226 is one of the processing units by the measurement processing engine, and reads the allowable range value as the reference information corresponding to the inspection image 10 from the memory 240.

The inspection image processing unit 226 obtains a region of the inspection image 10 in which the first pressure value converted from the inspection image 10 corresponds to within the first pressure range value and a region (a region exceeding the upper limit value of the first pressure range value and a region exceeding the lower limit value) exceeding the first pressure range value, and makes the images of these regions identifiable. Specifically, the color development (hue) of the images of these regions is changed, for example, the images of the regions corresponding to within the first pressure range value are color-separated in magenta, the image of the region exceeding the upper limit values of the first pressure range value is color-separated in yellow, and the image of the region exceeding the lower limit value of the first pressure range value is color-separated in green. In addition, the first pressure range value may be set in advance by the user and stored in the memory 240, or may be the same value as the allowable range value.

The image color-separated by the inspection image processing unit 226 is output to the user terminal via the output unit 210B and displayed on the display of the user terminal ((B) of Fig. 8). By visually recognizing the color-separated image, the inspector can confirm the region of the pressure applied to the inspection surface of the measurement object, which satisfies the allowable range value, and can use the region as a reference for pass/fail determination which is the final determination for the measurement object.

### <Enhancement display of pressure distribution>

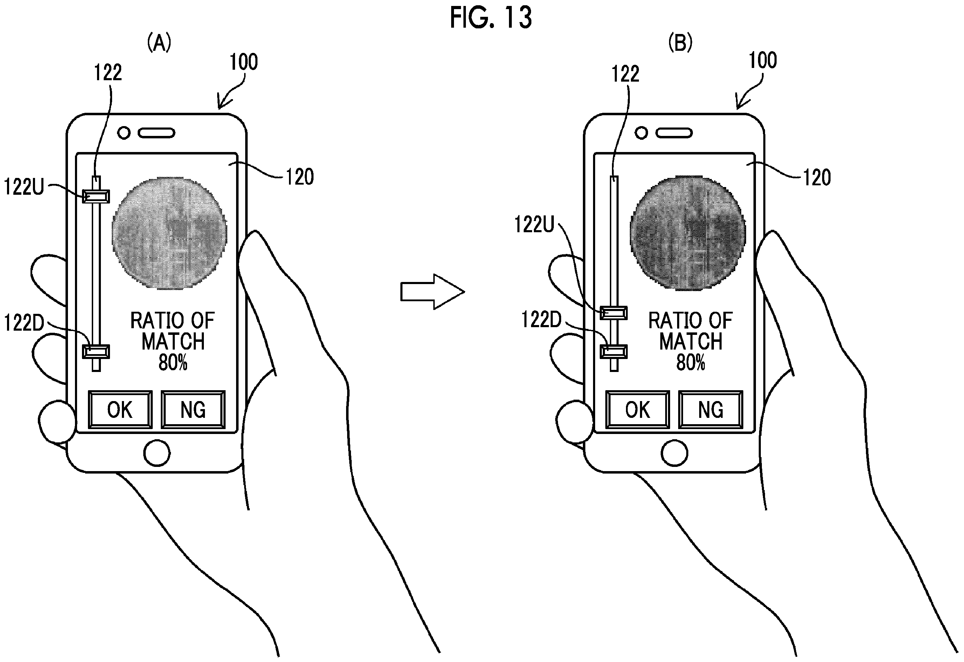

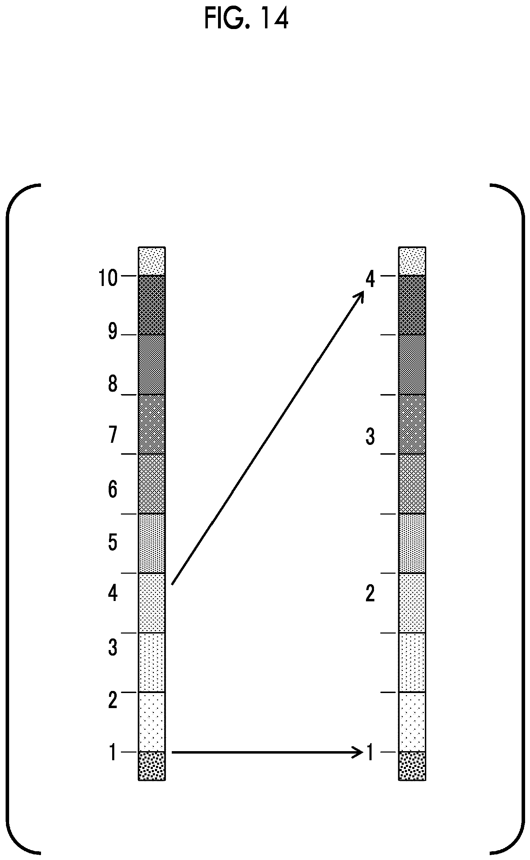

Fig. 13 is a view showing the screen transition of the smartphone in a case where the shading of the captured inspection image is enhanced, and Fig. 14 is an image view of internal processing in a case where the shading of the inspection image is enhanced.
(A) of Fig. 13 shows a state in which the inspection image is displayed as it is on the display 120 of the smartphone 100. The inspection image in this case is an image that develops color in accordance with the pressure distribution applied to the pressure measurement sheet.

Now, in the inspection image shown in (A) of Fig. 13, for example, a gradation width (gradation) of 0 to 255 is assigned corresponding to 1 to 10 MPa on the scale showing the pressure on the left side of Fig. 14.

In contrast, in a case where the pressure distribution applied to the inspection surface of the measurement object is 1 to 4 MPa, or in a case where the user wants to perform determination only by 1 to 4 MPa, in the inspection image shown in (A) of Fig. 13, the gradation width corresponding to 1 to 4 MPa is narrow, and the pressure change rate (degree of partial contact) or the like is not easily confirmed.

In this case, it is preferable to enlarge the gradation width corresponding to 1 to 4 MPa shown on the left side of Fig. 14, as shown on the right side of Fig. 14.

In a case where the gradation width is enlarged, knobs 122U and 122D of a slide bar 122 displayed on the display 120 of the smartphone 100 are operated to set the pressure range value (second pressure range value) at which the gradation range is to be enlarged.

In a case where the second pressure range value is received by the user specification and an inspection image is generated, the display control unit 101A (Fig. 10) of the smartphone 100 generates an inspection image in which a gradation width representing shading is enlarged with respect to the image of the inspection image corresponding to within the second pressure range value, and causes the display 120 to display the inspection image with an enlarged gradation width.

Accordingly, the gradation within the desired pressure range value in the color-developed gradation according to the intensity of the pressure applied to the pressure measurement sheet can be enhanced, and the pass/fail determination by the user can be supported.

### <3D display of pressure distribution>

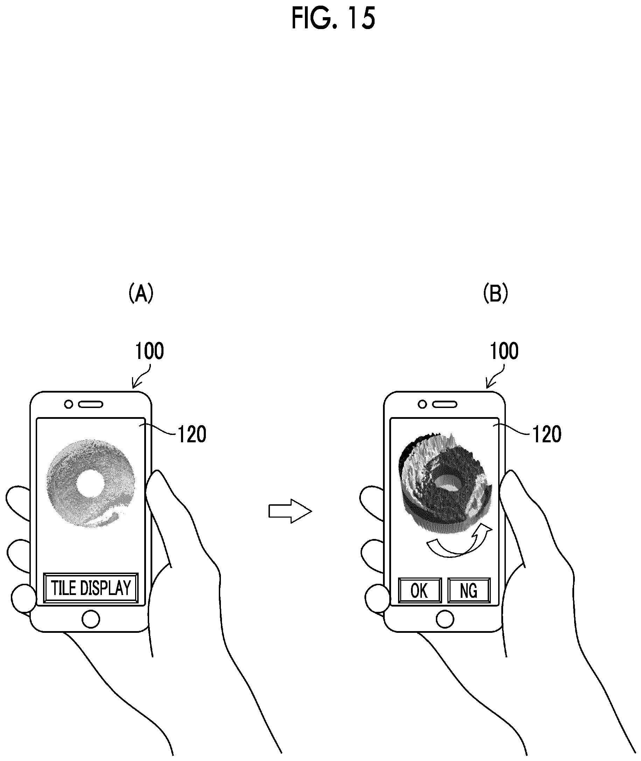

Fig. 15 is a view showing the screen transition of the smartphone in a case where the captured inspection image is displayed in 3D.
(A) of Fig. 15 shows a state in which the inspection image is displayed in 2D (D: Dimension) on the display 120 of the smartphone 100. The inspection image displayed in 2D represents the intensity (pressure distribution) of the pressure by the shading of the image.
   A "tilt display" icon is displayed on the display 120 shown in (A) of Fig. 15, and in a case where the "inclination display" icon is tapped, the screen is switched to 3D display of the inspection image as shown in (B) of Fig. 15.
(B) of Fig. 15 shows a state in which the inspection image is displayed in 3D on the display 120 of the smartphone 100.

The inspection image displayed in 3D is configured as a three-dimensional image (3D image) having an uneven shape according to the magnitude of the pressure value (first pressure value) corresponding to the density distribution of the inspection image. In addition, it is preferable that each pixel corresponding to the inspection surface of the 3D image has the same density information as each pixel of the inspection image displayed in 3D.

This 3D image may be generated by the display control unit 101A (Fig. 10) of the smartphone 100, or the like, or the smartphone 100 may receive an image generated by the server 200.

The display control unit 101A of the smartphone 100 has a function as a 3D viewer, and causes the display 120 to display the inspection image in 3D in a case where the "inclination display" icon is tapped. Then, in a case where the display control unit 101A receives a rotation instruction for the 3D image by a touch operation (for example, an operation of sliding a finger touching the screen in an optional direction) of the display 120, the display control unit 101A performs display control by rotating and moving the 3D image on the display 120 on the basis of the received rotation instruction.

By displaying the inspection image in 3D in this way, the user can intuitively confirm the inclination of the pressure distribution, and the like.

In addition, a 3D image showing the second pressure value of the limit sample may be generated, and a 3D image showing the first pressure value of the inspection image and the 3D image showing the second pressure value of the limit sample may be displayed on the display 120 of the smartphone 100 so as to be comparable with each other.

### <Superimposed display of inspection image and limit sample>

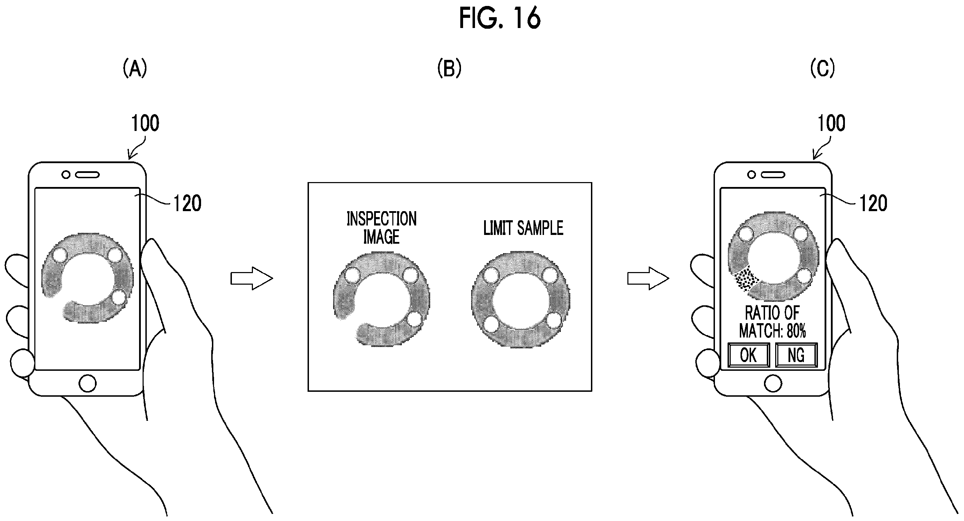

Fig. 16 is a view showing the screen transition of the smartphone in a case where the captured inspection image and the limit sample are superimposed on each other and displayed.
(A) of Fig. 16 shows a state in which the captured inspection image is displayed on the display 120 of the smartphone 100. The inspection image displayed on the display 120 represents the intensity (pressure distribution) of the pressure by the shading of the image.
(B) of Fig. 16 shows an inspection image and an image of a limit sample to be synthesized with each other.

The image of the limit sample is a limit sample having the second pressure value to be two-dimensionally distributed on the inspection surface of the measurement object, and is an image having shading according to the second pressure value. It is preferable that the inspection image synthesized with the limit sample has a display color different from the display color of the image of the limit sample.

Additionally, it is preferable that the inspection image has transmittance according to the shading (that is, the first pressure value) of the inspection image. The transmittance is set on the basis of the brightness (shading) of each pixel of the inspection image. A light-colored region can be set to have a high transmittance and be transparent, and a dark-colored region can be set to have a low transmittance and an opaque color.

The inspection image processing unit 226 (Fig. 12) of the server 200 generates a transmission image having a display color different from the display color of the image of the limit sample from the input inspection image 10 and having a transmittance according to the first pressure value, and generates a superimposed image obtained by superimposing the generated transmission image on the image of the limit sample.

It is preferable that in a case where the transmission image and the image of the limit sample are superimposed on each other, a plurality of feature points of the transmission image and a plurality of feature points of the image of the limit sample are extracted, the plurality of feature points corresponding to each other are obtained, and the transmission image is projected, converted, and superimposed such that the plurality of feature points corresponding to each other match each other. Additionally, in a case where the size and shape of the inspection image and the image of the limit sample are normalized, the transmission image may be translated, rotated, and superimposed such that the transmission image best matches the image of the limit sample.

The inspection image processing unit of the server 200 transmits the superimposed image generated as described above to the smartphone 100 via the output unit 210B as the evaluation information.

(C) of Fig. 16 shows a state in which the superimposed image transmitted from the server 200 is displayed on the display 120 of the smartphone 100.

In addition to the inspection image shown in (A) of Fig. 16, the inspector determines pass/fail, which is a final determination for the measurement object, with reference to the superimposed image of the inspection image and the image of the limit sample shown in (C) of Fig. 16, taps the "OK" icon in the case of a pass, and taps the "NG" icon in the case of fail.

The pass/fail determination result of the inspection for each measurement object according to the user instruction is transmitted to the server 200 and stored as the accessory information of the inspection image 230 in the image database of the server 200.

### [Third embodiment]

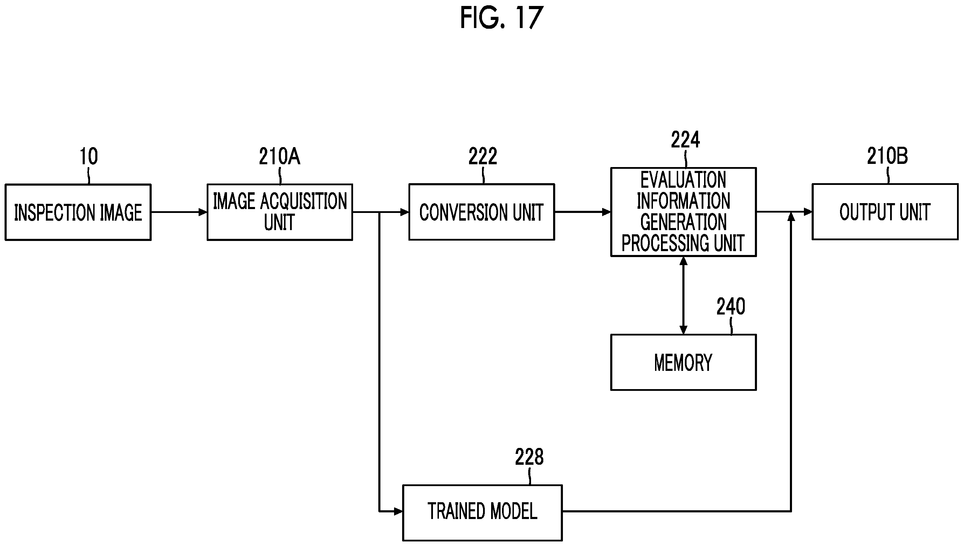

Fig. 17 is a block diagram showing a third embodiment of the surface pressure analysis device according to the present invention. In addition, in Fig. 12, the portions common to the surface pressure analysis device of the first embodiment shown in Fig. 11 will be designated by the same reference numerals, and the detailed description thereof will be omitted.

The surface pressure analysis device of the third embodiment shown in Fig. 17 is different from the surface pressure analysis device of the first embodiment in that a trained model 228 is mainly added.

The inspection image 10 acquired by the image acquisition unit 210A is input to the trained model 228.

The trained model 228 uses, as training data, a data set in which the inspection image accumulated in the image database 230 (Fig. 10) and the pass/fail determination result (correct answer data), which is one of the accessory information of the inspection image are paired, causes the training model to receive machine training, and performs a pass/fail determination for the input inspection image.

In addition, as the training model, a CNN model including a convolutional neural network (CNN) is conceivable, and representative training models such as VGG16 and Alex Net can also be applied.

The pass/fail determination result determined by the trained model 228 is transmitted to the smartphone 100 via the output unit 210B.

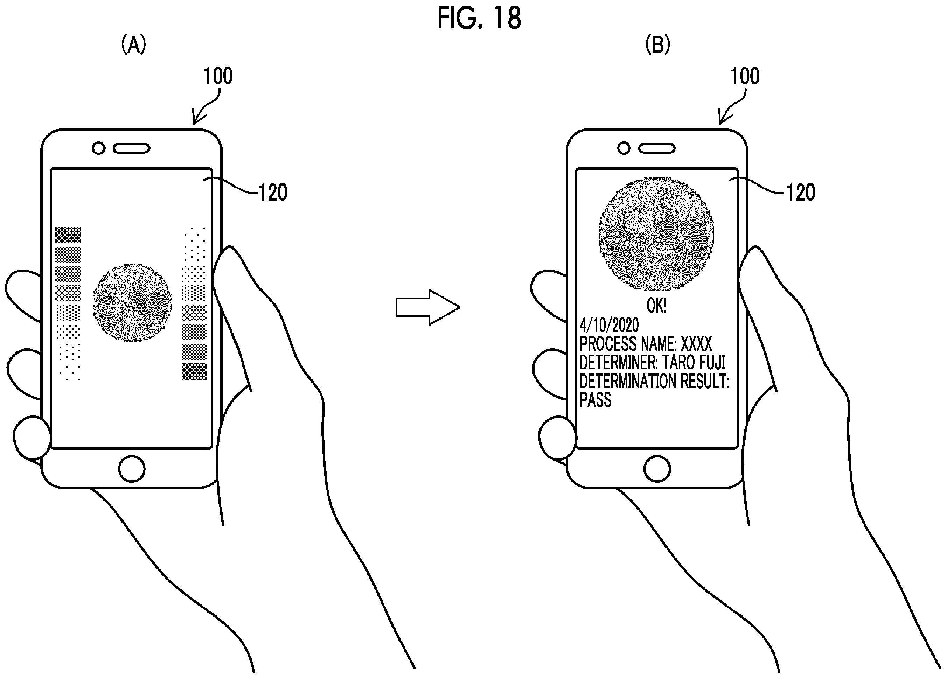

Fig. 18 is a view showing another screen transition of the smartphone from the inspection image display to the inspection result display.

The inspection image is displayed similar to (A) of Fig. 8 on the display 120 of the smartphone 100 shown in (A) of Fig. 18.

The server 200 uses the inspection image transmitted from the smartphone 100 as the input image of the trained model 228 (Fig. 17), and returns the pass/fail determination result and the like determined by the trained model 228 to the smartphone 100.

The display 120 of the smartphone 100 shown in (B) of Fig. 18 displays the primary determination result determined by the server 200 with respect to the inspection image. In an example shown in (B) of Fig. 18, "OK!" and "Pass" are displayed as the primary determination results.

In addition, since the trained model 228 can obtain the classification result (determination probability of pass/fail classification) for classifying the input inspection image into two categories, "pass" and "fail", the server 200 may transmit this determination probability to the smartphone 100, and cause the display 120 of the smartphone 100 to display "certainty" of passing the measurement object.

In addition, in Fig. 10 and the first to third embodiments, the user terminal that communicates with the server 200 is the smartphone 100. However, the present invention is not limited to this, and the PC 160 to which the scanner 150 is connected, the PC 180 to which the surface pressure distribution measuring instrument 170 including the pressure sensor sheet 170A is connected, or the like may be used as the user terminal.

### [Issuance of inspection result aggregation report]

The server 200 can issue (transmit) an inspection result aggregation report to a user terminal such as the smartphone 100, the PC 160, or the PC 180. That is, the user terminal can access the server 200, download the inspection result aggregation report from the image database 230 or the like, and output the report to a printer or a display.

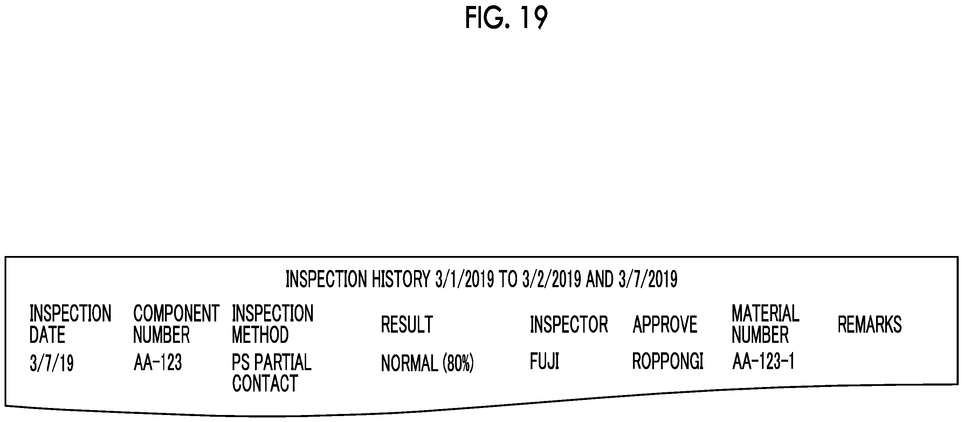

Fig. 19 is a view showing an example of the inspection result aggregation report. The inspection result aggregation report shown in Fig. 19 includes items such as an inspection date, a component number, an inspection method, a pass/fail result, an inspector name, an approver name, and a document number.

Additionally, the server 200 can also output statistical information reports such as the yield (pass rate, and the like) during the period of the inspection history and a daily yield transition. Additionally, the report output may be data output in text format or the like.

In addition, in each of the above embodiments, a case where the smartphone 100 in which the application software corresponding to the present system is installed is used as the user terminal has been described. However, the present invention is not limited to this, and it is needless to say that the present invention can use other user terminals such as the PC 160 and the PC 180 on which the application software corresponding to the system shown in Fig. 1 is installed.

### [Surface pressure analysis method]

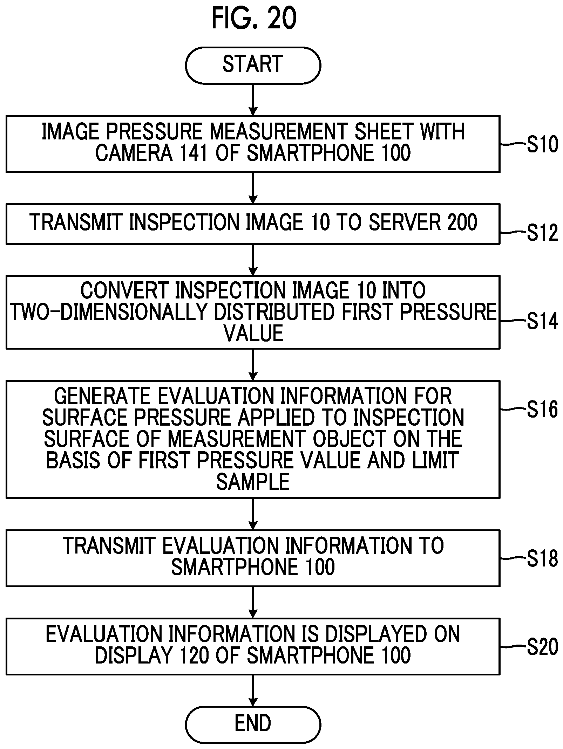

Fig. 20 is a flowchart showing an embodiment of a surface pressure analysis method according to the present invention. In addition, the processing of respective steps shown in Fig. 20 is performed by, for example, a processor including the smartphone 100 of the surface pressure analysis device shown in Fig. 10, the CPU 220 of the server 200, and the like.

In Fig. 20, the user uses the smartphone 100 and images the pressure measurement sheet with the camera 141 of the smartphone 100 (Step S10). In addition, the pressure measurement sheet to be imaged is color-developed with a density distribution according to the surface pressure applied to the inspection surface of the measurement object.

In a case where the transmission instruction of the inspection image 10 captured by the camera 141 is received by the user operation, the smartphone 100 transmits the inspection image 10 to the server 200 (Step S12).

The processor of the server 200 performs the processing of converting the inspection image 10 transmitted from the smartphone 100 into a pressure value (two-dimensionally distributed first pressure value) corresponding to the shading of the inspection image 10 (Step S14).

Subsequently, the processor performs the processing of generating the evaluation information for the surface pressure applied to the inspection surface of the measurement object on the basis of the first pressure value and the preset reference information (for example, limit sample) (Step S16). The evaluation information can be information indicating the rate of match between the first pressure value converted from the inspection image 10 and the second pressure value of the limit sample. Additionally, in a case where the user wants to inspect the rate of match in the preset allowable range value, the rate of match of areas and the rate of match of shapes between the first region in which the first pressure value on the inspection surface identified from the inspection image 10 is within the allowable range value and the second region where the second pressure value distributed on the limit sample is within the allowable range value can be used as the evaluation information.

The processor transmits the generated evaluation information to the smartphone 100 (Step S18). Accordingly, the evaluation information is displayed on the display 120 of the smartphone 100 (Step S20).

The inspector can perform a pass/fail determination, which is the final determination of the measurement object, with reference to the evaluation information (primary determination result) displayed on the display 120. This pass/fail determination result is transmitted from the smartphone 100 to the server 200, and is managed as the accessory information of the inspection image 10 in the image database 230.

In this way, since the inspector performs a pass/fail determination of the measurement object with reference to the primary determination result provided by the server 200, it is possible to perform the pass/fail determination of the measurement object with high accuracy. Additionally, in a case where the pass/fail determination of the measurement object can be performed by a plurality of inspectors, leveling of the determination result can be achieved.

### [Others]

The surface pressure analysis device shown in Figs. 1 and 10 is configured as the surface pressure analysis system consisting of the user terminal and the server, but is not limited to this, and may include a single server or a single user terminal (stand-alone). In this case, the user terminal needs to include various processing functions processed by the server by installing the surface pressure analysis program.

Additionally, the hardware that realizes the surface pressure analysis device according to the present invention can be configured by various processors. The various processors include a central processing unit (CPU) that is a general-purpose processor that executes programs to function as various processing units, a programmable logic device (PLD), which is a processor capable of changing the circuit configuration after manufacturing, such as a field programmable gate array (FPGA), a dedicated electric circuit, which is a processor having a circuit configuration designed in a dedicated manner to execute specific processing, such as application specific integrated circuit (ASIC), and the like. One processing unit constituting the surface pressure analysis device may include one of the above various processors, or may include two or more processors of the same type or different types. For example, one processing unit may be constituted by a plurality of FPGAs or a combination of a CPU and an FPGA. Additionally, a plurality of processing units may be constituted of one processor. As an example in which the plurality of processing units is constituted of one processor, firstly, as represented by a computer such as a client or a server, there is a form in which one processor is configured by a combination of one or more CPUs and software and this processor functions as the plurality of processing units. Secondly, as represented by system on chip (SoC), there is a form in which a processor that realizes the functions of the entire system including a plurality of processing units with one integrated circuit ((IC) chip is used. In this way, the various processing units are configured using one or more various processors as the hardware structure. Moreover, the hardware structure of the various processors is, more specifically, an electric circuit (circuitry) in which circuit elements such as semiconductor elements are combined together.

Additionally, the present invention also includes the surface pressure analysis program that causes the computer to function as the surface pressure analysis device according to the present invention by being installed in the computer, and a storage medium in which the surface pressure solution program is recorded.

Moreover, it goes without saying that the present invention is not limited to the above-described embodiments, and various modifications can be made without departing from the spirit of the present invention.

### Explanation of References

1: pressure measurement sheet
2,2-1, 2-2: calibration sheet
2A to 2D: density chart
2E: frame
4: network
10: inspection image
10-1, 10-2: image
100: smartphone
101: main control unit
101A: display control unit
101B: image acquisition unit
101C: communication control unit
110: wireless communication unit
120: display
122: slide bar
140: operation unit
141: camera
150: scanner
160, 180: PC
170: surface pressure distribution measuring instrument
170A: pressure sensor sheet
200: server
210: communication unit
210A: image acquisition unit
210B: output unit
220: CPU
222: conversion unit
224: evaluation information generation processing unit
226: inspection image processing unit
228: trained model
230: image database
240: memory
S10 to S20: steps

## Claims

1. A surface pressure analysis device comprising:
a processor; and
a memory that stores reference information corresponding to a measurement object,
wherein the processor is configured to perform
processing of acquiring a two-dimensionally distributed first pressure value applied to an inspection surface of the measurement object,
processing of generating evaluation information for a surface pressure applied to the inspection surface of the measurement object on the basis of the acquired first pressure value and the reference information stored in the memory, and
processing of outputting the generated evaluation information to a display.

2. The surface pressure analysis device according to claim 1,
wherein the processing of acquiring the first pressure value includes
processing of acquiring an inspection image from a camera that images a pressure measurement sheet disposed on the inspection surface of the measurement object and color-developed with a density distribution according to the surface pressure applied to the inspection surface, or from a scanner that scans the pressure measurement sheet, and
processing of converting the acquired inspection image into the two-dimensionally distributed first pressure value, and
the processor acquires the converted first pressure value.

3. The surface pressure analysis device according to claim 1,
wherein the processing of acquiring the first pressure value includes
acquiring the first pressure value from a surface pressure distribution measuring instrument that includes a pressure sensor sheet disposed on the inspection surface of the measurement object and outputs the two-dimensionally distributed first pressure value on the basis of an electrical signal according to the surface pressure applied to the inspection surface output from the pressure sensor sheet.

4. The surface pressure analysis device according to claim 3,
wherein the processor performs processing of generating an inspection image having a density distribution according to the electrical signal on the basis of the electrical signal according to the surface pressure applied to the inspection surface.

5. The surface pressure analysis device according to claim 2 or 4,
wherein the processor causes the display to display the inspection image.

6. The surface pressure analysis device according to any one of claims 1 to 5,
wherein the reference information is a limit sample having a second pressure value to be two-dimensionally distributed on the inspection surface, and
the processing of generating the evaluation information generates information indicating a rate of match between the acquired first pressure value and the limit sample as the evaluation information.

7. The surface pressure analysis device according to claim 6,
wherein the reference information includes a preset allowable range value, and
the rate of match is at least one of a rate of match of areas or a rate of match of shapes between a first region where the first pressure value is within the allowable range value and a second region where the second pressure value of the limit sample is within the allowable range value.

8. The surface pressure analysis device according to claim 7,
wherein the rate of match of the areas is a ratio of the areas between the first region and the second region.

9. The surface pressure analysis device according to claim 7 or 8,
wherein the rate of match of the shapes is a ratio of an area where the first region and the second region overlap each other and the area of the second region.

10. The surface pressure analysis device according to claim 6,
wherein the rate of match is a rate of match between the first pressure value and the second pressure value at one or a plurality of determination points of the inspection surface.

11. The surface pressure analysis device according to claim 6,
wherein the rate of match is a rate of match between the first pressure value and the second pressure value at a plurality of determination points of the inspection surface for every plurality of determination points of the inspection surface, and
the processing of generating the evaluation information generates information indicating at least one rate of match of the rates of match for every plurality of determination points as the evaluation information.

12. The surface pressure analysis device according to claim 6,
wherein the rate of match is a sum-of-products calculation value between an absolute difference between the first pressure value and the second pressure value at a plurality of determination points of the inspection surface and a weighting coefficient for every plurality of determination points.

13. The surface pressure analysis device according to any one of claims 1 to 5,
wherein the reference information is a preset allowable range value, and
the processing of generating the evaluation information generates at least one of an area of a first region where the first pressure value is within the allowable range value or a ratio of the area of the first region and an area of the inspection surface as the evaluation information.

14. The surface pressure analysis device according to any one of claims 1 to 5,
wherein the reference information is determination point information indicating regions or positions indicating a plurality of determination points of the measurement object, and
the processing of generating the evaluation information specifies the first pressure values at the plurality of determination points on the basis of the determination point information, and generates information indicating a rate of match between the specified first pressure values as the evaluation information.

15. The surface pressure analysis device according to claim 14,
wherein the reference information includes a threshold value set for an absolute difference in pressure applied to the plurality of determination points of the measurement object, and
the processing of generating the evaluation information calculates an absolute difference between the specified first pressure values, and generates information indicating whether or not the calculated absolute difference is within the threshold value as the evaluation information.

16. The surface pressure analysis device according to any one of claims 1 to 5,
wherein the reference information is determination point information indicating a region or position indicating one or a plurality of determination points of the measurement object, and an allowable range value preset corresponding to the determination point information, and
the processing of generating the evaluation information specifies the first pressure value at the determination point on the basis of the determination point information, and generates the evaluation information on the basis of the specified first pressure value and the allowable range value.

17. The surface pressure analysis device according to claim 13 or 14,
wherein the processor performs
processing of receiving determination point information indicating a region or position indicating a determination point of the measurement object by a user specification, and
processing of registering the received determination point information in the memory.

18. The surface pressure analysis device according to claim 2, 4, or 5,
wherein the processor generates the inspection image in which an image of the inspection image corresponding to within a first pressure range value and an image of the inspection image exceeding the first pressure range value are made identifiable.

19. The surface pressure analysis device according to claim 2, 4 or 5,
wherein the processor
performs processing of receiving a second pressure range value by a user specification, and
generates the inspection image in which a gradation width representing shading is enlarged with respect to an image of the inspection image corresponding to within the second pressure range value, in a case where the inspection image is generated.

20. The surface pressure analysis device according to claim 2, 4, or 5,
wherein the processor performs
processing of generating a three-dimensional image having an uneven shape according to a magnitude of the first pressure value on the basis of the inspection image, and
processing of receiving a rotation instruction for the three-dimensional image by a user operation, and
the processor rotates and moves the three-dimensional image on the display on the basis of the received rotation instruction.

21. The surface pressure analysis device according to claim 5,
wherein the reference information is a limit sample having a second pressure value to be two-dimensionally distributed on the inspection surface, and
the processing of generating the evaluation information generates a superimposed image in which the inspection image having shading according to the first pressure value is superimposed on an image of the limit sample having shading according to the second pressure value, and uses the superimposed image as the evaluation information.

22. The surface pressure analysis device according to claim 21
wherein the inspection image superimposed on the image of the limit sample is a transmission image having a display color different from a display color of the image of the limit sample and having transmittance according to the first pressure value.

23. The surface pressure analysis device according to claim 2, 4, or 5,
wherein the processor performs processing of receiving a pass/fail determination result for inspection according to a user instruction for each measurement object, and storing the inspection image for each measurement object and accessory information for inspection including the pass/fail determination result in a database.

24. The surface pressure analysis device according to claim 23,
wherein the accessory information includes one or more of identification information of the measurement object, a type of the pressure measurement sheet, an inspection condition, a pressure type, and information on an inspector who has instructed the pass/fail determination result, in addition to the pass/fail determination result.

25. The surface pressure analysis device according to claim 23 or 24,
wherein the processor has a trained model in which a set of the inspection image and the pass/fail determination result stored in the database is machine-trained as training data, and
the trained model outputs a pass/fail determination result in a case where an optional inspection image is input.

26. The surface pressure analysis device according to claim 2 or 4, further comprising:
a user terminal;
a server that mutually communicates between the user terminal and the user terminal,
wherein the user terminal transmits the inspection image to the server,
the server generates the evaluation information for the inspection image and transmits the generated evaluation information to the user terminal, in a case where the server receives the inspection image from the user terminal, and
the user terminal causes the display of the user terminal to display the evaluation information in a case where the user terminal receives the evaluation information from the server.

27. A surface pressure analysis method of analyzing, by a processor, a two-dimensionally distributed surface pressure applied to an inspection surface of a measurement object,
wherein each processing of the processor includes
a step of acquiring a two-dimensionally distributed first pressure value applied to the inspection surface of the measurement object,
a step of generating evaluation information for the surface pressure applied to the inspection surface of the measurement object on the basis of the acquired first pressure value and reference information stored in a memory, and
a step of outputting the generated evaluation information to a display.

28. A surface pressure analysis program that causes a computer to realize a surface pressure analysis method of analyzing a two-dimensionally distributed e surface pressure applied to an inspection surface of a measurement object,
wherein the surface pressure analysis method includes
a step of acquiring a two-dimensionally distributed first pressure value applied to the inspection surface of the measurement object,
a step of generating evaluation information for the surface pressure applied to the inspection surface of the measurement object on the basis of the acquired first pressure value and reference information stored in a memory, and
a step of outputting the generated evaluation information to a display.

29. A non-temporary and computer-readable recording medium on which the program according to claim 28 is recorded.
